# EUROPÄISCHE PATENTSCHRIFT

(11) **EP 1 095 729 B1**
(45) Veröffentlichungstag und Bekanntmachung des Hinweises auf die Patenterteilung: **19.01.2005**
(21) Anmeldenummer: 00120518.6
(22) Anmeldetag: 20.09.2000
(51) Int. Cl.: B23P 19/00, B23P 21/00, E05B 17/00, E05D 15/52

(54) **Vorrichtung und Verfahren zur maschinellen Montage von Beschlagteilen an Flügel und/oder Blendrahmen von Fenstern, Türen oder dergleichen**
Device and method for automatically assembling fittings to wings and/or frames of windows,or doors or the like
Dispositif et procédé de montage automatique des ferrures sur las ailes et/ou dormants des fenêtres, portes ou similaires

(30) Priorität: 30.10.1999 DE 19952492
(43) Veröffentlichungstag der Anmeldung: 02.05.2001
(73) Patentinhaber: ROTO FRANK AG, 70771 Leinfelden-Echterdingen (DE)
(72) Erfinder: Kurth, Martin Dr., 72768 Reutlingen (DE)

(56) Entgegenhaltungen:
- EP-A- 0 683 297
- EP-A- 0 886 026
- EP-A- 0 988 922
- DE-A- 4 445 888
- DE-A- 19 712 082

## Beschreibung

Die Erfindung betrifft eine Vorrichtung zur maschinellen Montage von Beschlagteilen an Flügelund/oder Blendrahmen von Fenstern, Türen oder dergleichen, gemäß Oberbegriff des Anspruchs 1 sowie ein Verfahren zur maschinellen Montage von Beschlagteilen an Flügel- und/oder Blendrahmen von Fenstern, Türen oder dergleichen, gemäß Oberbegriff des Anspruchs 17.

Aus der DE 197 25 627 A1 sind Vorrichtungen und Verfahren zur automatenunterstützten Montage von Beschlagteilen eines Drehkipp-Beschlag-Systems an einem Flügelrahmen bekannt. In einer ersten Bearbeitungsstation, in der ausschließlich Eckumlenkungen an dem Flügelrahmen angebracht werden, ist eine erste Montagevorrichtung angeordnet, die eine Zuführeinrichtung für in einem Magazin bereitgestellte Eckumlenkungen und zwei Schrauber zum Befestigen der Eckumlenkungen umfaßt, die jeweils einem Schenkel der Eckumlenkung zugeordnet ist. Die erste Montagevorrichtung umfaßt ein rechtwinkliges Aufnahmeelement, das dazu dient, die Eckumlenkung genau in ihrem Eckbereich zu erfassen, wobei beide Schenkel der Eckumlenkung teilweise vom Aufnahmeelement übergriffen werden. Um die Eckumlenkung an dem Flügelrahmen anbringen zu können, muß dieser so gedreht werden, daß die Längsachse eines Holmes des Flügelrahmens gegenüber der Transportrichtung um einen Winkel von 45° gedreht ist. Die Eckumlenkung wird senkrecht zum Umfang des Flügelrahmens an diesen angestoßen und festgeschraubt. Nachdem der Flügelrahmen mit mehreren Eckumlenkungen versehen worden ist, wird er über eine Rollenbahn zu einer zweiten Bearbeitungsstation transportiert, in der mit Hilfe einer zweiten Montagevorrichtung Langteile, die aus Stulpschiene und Treibstange bestehen, an dem Flügelrahmen angebracht werden. Der Flügelrahmen muß hierzu erneut verschwenkt werden, so daß die Längsachse des Holmes parallel zur Transportrichtung verläuft. Die zweite Montagevorrichtung umfaßt eine von einer Greifereinrichtung gebildeten Zuführeinrichtung, die ein erstes Greifelement und ein in einem Abstand davon angeordnetes zweites Greifelement umfaßt, das gegenüber dem ersten Greifelement verlagerbar ist. Die entlang der Längsachse des Holmes des vormontierten Flügelrahmens verlagerbare Greifereinrichtung übernimmt aus einem Magazin ein Langteil, indem es mit den Greifelementen in eine Ausnehmung im Langteil eingreift, wobei durch ein Relativbewegung des zweiten Greifelement gegenüber dem ersten Greifelement das Langteil klemmend erfaßt wird. Durch eine Verlagerung der Greifereinrichtung senkrecht zum Umfang des Flügelrahmens wird das Langteil an den Holm angelegt und mit Hilfe von zwei stationär angeordneten Schraubern am Flügelrahmen festgeschraubt. Nachteilig bei dem bekannten Drehkipp-Beschlag-System ist dessen aufwendiger und kostenintensiver Aufbau, der unter anderem durch die Montagevorrichtungen für die Eckumlenkungen und Langteile bedingt ist. Überdies ist aufgrund der großen Baulänge des Drehkipp-Beschlag-Systems der dafür benötigte Platz sehr groß.

Es ist daher Aufgabe der Erfindung, eine Vorrichtung zur maschinellen Montage von Beschlagteilen an Flügel- und/oder Blendrahmen von Fenstern, Türen oder dergleichen zu schaffen, bei der ein kompakter und vorzugsweise kostengünstiger Aufbau realisierbar ist. Ein weiteres Ziel der Erfindung ist es, ein Verfahren zur maschinellen Montage von Beschlagteilen an Flügel- und/oder Blendrahmen von Fenstern, Türen und dergleichen anzugeben, welches eine schnelle Montage von mehreren Beschlagteilen an einem Flügelrahmen ermöglicht.

Zur Lösung der Aufgabe wird eine Vorrichtung mit den Merkmalen des Anspruchs 1 vorgeschlagen. Die Montagevorrichtung umfaßt eine Zuführeinrichtung und eine zum Befestigen eines Beschlagteils an Flügel- und/oder Blendrahmen von Fenstern, Türen und dergleichen dienende Befestigungseinrichtung. Die Zuführeinrichtung umfaßt mindestens ein mit dem zu montierenden Beschlagteil zusammenwirkendes Funktionselement, mit dessen Hilfe das Beschlagteil erfaßt und aufgenommen werden kann. Die Montagevorrichtung zeichnet sich dadurch aus, daß die Zuführeinrichtung derart ausgebildet ist, daß sowohl Eckbeschläge als auch Langteile montierbar sind. Die Zuführeinrichtung ist also universell einsetzbar, so daß mindestens ein Eckbeschlag und wenigstens ein Langteil an einem Ort, das heißt an einer Montagestation, an dem Flügel- und/oder Blendrahmen montierbar sind, ohne daß hierzu der Flügelund/oder Blendrahmen an eine andere, zweite Montagestation transportiert werden muß, wie es bei den aus dem Stand der Technik bekannten Montagesystemen erforderlich ist. Aufgrund dieser Ausgestaltung kann eine kompakte und nur wenig Platz beanspruchende Bauweise der Montagevorrichtung realisiert werden. Ferner kann die Montagezeit gegenüber den bekannten Montagesystemen verkürzt werden.

Im Zusammenhang mit der hier vorliegenden Erfindung werden unter dem Begriff "Eckbeschläge" insbesondere Eckbänder, Stulpwinkel, Eckumlenkungen, die Stulpschienen und Schubstangen sowie gegebenenfalls Verschlußelemente wie zum Beispiel Exzenter-, Pilzoder 3D-Pilzzapfen umfassen, oder dergleichen verstanden. Unter dem Begriff "Langteile" werden insbesondere einbaufähige, beispielsweise aus Stulpschienen und Schubstangen zusammengesetzte und gegebenenfalls Verschlußelemente aufweisende Beschlagteile verstanden. Die Eckbeschläge und Langteile können an ihren einem am Holm benachbart angeordneten Beschlagteil zugeordneten Endbereich Kopplungselemente zur Verkettung der Beschlagteile untereinander aufweisen. Ferner können auch endständige Langteile und auch Eckbeschläge eingesetzt werden, die an mindestens einem Endbereich keine Kopplungsmöglichkeit für ein anderes Beschlagteil aufweisen. Mit Hilfe der Zuführeinrichtung sind praktisch alle Ausführungsvarianten von Eckbeschlägen und Langteilen maschinell montierbar.

Die Vorrichtung zeichnet sich dadurch aus, daß die Zuführeinrichtung von einer Greifereinrichtung gebildet ist, die mindestens einen Greiferkopf mit mehreren Greifelementen umfaßt, von denen ein erstes Greifelement und ein zweites Greifelement in einem fixen, also gleichbleibenden Abstand voneinander angeordnet sind. Außerdem ist ein drittes Greifelement vorgesehen, daß gegenüber den ersten und zweiten Greifelementen verlagerbar ausgebildet ist. Mit Hilfe der Greifereinrichtung können Eckbeschläge als auch Langteile erfaßt, das heißt gegriffen und klemmend gehalten werden. Bei einer vorteilhaften Ausführungsvariante ist mindestens ein Greifelement, vorzugsweise alle Greifelemente, als zylindrischer Greiffinger ausgebildet, der in einen eigens dafür in das Beschlagteil eingebrachten Greifschlitz oder einen Funktionsschlitz im Beschlagteil eingreift. Unter dem Begriff "Greifschlitz" wird eine lediglich für die Montage des Beschlagteils benötigte Öffnung, Ausnehmung und dergleichen verstanden. Der Funktionsschlitz dient beispielsweise zur Führung mindestens eines Verschlußelements. Durch die Aufnahme des Beschlagteils durch die Greifereinrichtung wird das von einem Eckbeschlag oder einem Langteil gebildete Beschlagteil also senkrecht zu seiner Flachseite gegriffen.

Nach einer Weiterbildung der Erfindung ist vorgesehen, daß die Greifelemente auf einer gedachten Geraden angeordnet sind, wobei das dritte Greifelement eines der beiden äußeren Greifelemente bildet. Bevorzugt werden Eckbeschläge mit den zweiten und dritten Greifelementen aufgenommen, die einen relativ kleinen Abstand zueinander aufweisen, während Langteile mit den ersten und dritten Greifelementen gegriffen werden, deren Abstand voneinander groß ist.

In bevorzugter Ausführungsform ist die Greifereinrichtung und die Befestigungseinrichtung an einer entlang der Längsachse mindestens eines Holmes des Flügel- und/oder Blendrahmens frei verfahrbar geführten Transporteinrichtung angeordnet, so daß auch die Befestigungseinrichtung an einer gewünschten Stelle am Holm positioniert werden kann.

Nach einer Weiterbildung der Erfindung ist vorgesehen, daß die Zuführeinrichtung und die Befestigungseinrichtung auch quer oder im wesentlichen quer zur Längsachse des Holmes frei verfahrbar geführt ist, so daß die Greifereinrichtung und die Befestigungseinrichtung senkrecht zu einer in den Holm eingebrachten Flügel-/Blendrahmenfalz-Umfangsnut und in entgegengesetzter Richtung verlagerbar sind. Durch die Aufnahme des Beschlagteils senkrecht zu seiner Flachseite und dem orthogonalen Zuführen des Beschlagteils zu der Umfangsnut kann dieses ohne weiteres durch eine Linearbewegung der Zuführeinrichtung in die Umfangsnut eingebracht werden. Dabei kann ein Langteil bei entsprechender Anordnung zur Umfangsnut mit einer Hubbewegung senkrecht zur Umfangsnut vollständig in diese eingedrückt werden. Bei der Montage eines Eckbeschlags wird vorzugsweise zunächst nur ein erster Schenkel des Eckbeschlags durch eine lineare Hubbewegung senkrecht zur Umfangsnut in diese eingefahren, während erst daran anschließend der andere, zweite Schenkel des Eckbeschlags durch eine lineare, vorzugsweise nur sehr kleine Hubbewegung in Längsrichtung des Teils der Umfangsnut, in der der erste Schenkel angeordnet ist, in diese eingebracht, vorfixiert und mit dem Flügelrahmen verschraubt wird. Hierfür ist bei einem vorteilhaften Ausführungsbeispiel eine zweite -vorzugsweise pneumatische oder hydraulische- Hubeinrichtung vorgesehen, die vorzugsweise die gesamte Greifereinrichtung relativ gegenüber der Transporteinrichtung in Richtung der Längsachse des Holmes verschiebt.

Bei einer besonders bevorzugten Ausführungsform der Montagevorrichtung ist der Greiferkopf um eine vorzugsweise senkrecht zu der Längsachse eines Holmes des Flügel- und/oder Blendrahmens verlaufende Drehachse schwenkbar und/oder rotierbar ausgebildet, wobei die Drehachse in dem Bereich zwischen den ersten und zweiten Greifelementen angeordnet ist. Bei einer ersten Ausführungsvariante ist der Greiferkopf aus einer Ausgangsstellung um einen gewünschten Winkelbereich im und entgegen dem Uhrzeigersinn verschwenkbar, beispielsweise um ein Beschlagteil in eine gewünschte Montagestellung zu verlagern. Bei einer anderen Ausführungsvariante ist der Greiferkopf lediglich in einer Richtung um die Drehachse rotierbar ausgebildet, das heißt bei dem Verschwenken des Greiferkopfs aus seiner Ausgangsstellung in eine weitere Funktionsstellung kann der Greiferkopf lediglich dadurch erneut in seine Ausgangsstellung zurückverlagert werden, indem er in der gleichen Richtung weitergedreht wird, bis er sich schließlich einmal vollständig um die Drehachse gedreht hat. Durch den schwenk-/rotierbaren Greiferkopf kann beispielsweise ein einem Magazin entnommenes Beschlagteil vom Greiferkopf um 180° gedreht werden, so daß es für rechte und linke Fenster- und/oder Türflügel verwendbar ist, ohne daß dazu die Greifereinrichtung entlang der Längsachse des mit mindestens einem Beschlagteil zu versehenden Holmes verfahren werden muß. Für die Bereitstellung eines Beschlagteils, das sowohl für rechte und linke Fenster- und/oder Türflügel verwendbar ist, ist also ein Magazin ausreichend, in den eine Anzahl identisch ausgebildeter Beschlagteile in einer bestimmten Stellung zur Übernahme durch die Greifereinrichtung bereitgestellt werden, was den Aufbau der Montagevorrichtung vereinfacht und deren Bauraum verkleinert.

Eine weitere bevorzugte Ausführungsform der Montagevorrichtung zeichnet sich dadurch aus, daß die Befestigungseinrichtung von einer Schraubereinrichtung gebildet ist, die mindestens einen Schrauber umfaßt, der derart angeordnet ist, daß auch bei einer Verlagerung der Greifereinrichtung entlang der Längsachse des in Montageposition befindlichen Holms des Flügel- und/oder Blendrahmens und in einer in einem Winkel, vorzugsweise senkrecht, zur Längsachse verlaufenden Richtung der Abstand zwischen dem Schrauber und der Drehachse, um die der Greiferkopf drehbar ist, konstant ist. Hierzu ist der Schrauber beispielsweise gemeinsam mit der Greifereinrichtung auf der Transporteinrichtung montiert. Vorteilhaft hierbei ist, daß bei einem Beschlagteil, das mindestens eine Durchgangsöffnung für ein Befestigungselement, vorzugsweise eine Schraube, aufweist, die wenn es durch die Greifereinrichtung aufgenommen ist, den gleichen Abstand zur Drehachse des Greiferkopfs aufweist wie der Schrauber, ein Befestigen des Beschlagteils am Holm möglich ist, ohne daß dazu der Schrauber in Richtung der Längsachse des Holms verfahren werden muß. Bei einer anderen Ausführungsform ist vorgesehen, daß der Schrauber auch unabhängig von der Transporteinrichtung beziehungsweise der Greifereinrichtung entlang der Längsachse des Holms mit geeigneten Mitteln verlagerbar ist.

Nach einer Weiterbildung der Erfindung umfaßt die Schraubereinrichtung zwei in einem fixen, das heißt gleichbleibenden Abstand voneinander angeordnete Schrauber, deren jeweiliger Abstand zu der zwischen den ersten und zweiten Schraubern angeordnete Drehachse des Greiferkopfs gleich ist. Die Schrauber sind also symmetrisch zur Drehachse angeordnet, was insbesondere dann von Vorteil ist, wenn ein Beschlagteil mit zumindest einer Durchgangsöffnung für eine Befestigungsschraube von den Greifelementen so aufgenommen wird, daß der Abstand zwischen der Durchgangsöffnung und der Drehachse halb so groß ist wie der Abstand zwischen den ersten und zweiten Schraubern. Dadurch ist es möglich, das Beschlagteil durch eine Drehung des Greiferkopfs um 180° um seine Drehachse zu verschwenken, dem Holm des Flügel- und/oder Blendrahmens zuzuführen und an diesem festzuschrauben, ohne daß dazu die Schrauber beziehungsweise einer der Schrauber entlang der Längsachse des Holms verlagert werden müssen.

Weitere vorteilhafte Ausgestaltungen der Montagevorrichtung ergeben sich aus den übrigen Unteransprüchen.

Zur Lösung der Aufgabe wird auch ein Verfahren zur maschinellen Montage von Beschlagteilen an Flügelund/oder Blendrahmen von Fenstern, Türen und dergleichen mit den Merkmalen des Anspruchs 17 vorgeschlagen. In einem ersten Bearbeitungsschritt wird einem sich an einem Montageort befindlichen Holm des Flügel- und/oder Blendrahmens mindestens ein maschinell gegriffenes Beschlagteil zugeführt, das in einem zweiten Bearbeitungsschritt maschinell an dem Holm festgeschraubt wird. Das Verfahren zeichnet sich dadurch aus, daß an dem gleichen Montageort mindestens ein Eckbeschlag und mindestens ein Langteil an dem Holm montiert wird. Eine Verlagerung des Flügel- und/oder Blendrahmens an mehrere Montageorte, um Eckbeschläge und Langteile zu montieren, wie es bei den bekannten Montagesystemen vorgesehen ist, ist hier nicht erforderlich, wodurch die Montagezeit erheblich verkürzbar ist. Vorteilhaft ist ferner, daß eine Montagevorrichtung zur Durchführung des Verfahrens realisierbar ist, die einen einfachen und somit kostengünstigen sowie vorzugsweise kompakten Aufbau aufweist.

In einer bevorzugten Ausführungsform werden mehrere gleiche oder unterschiedliche Beschlagteile gleichzeitig an dem Holm montiert. Dadurch, daß die Beschlagteile anders wie bei herkömmlichen Verfahren nicht nacheinander, sondern in einer Montagestellung des Flügel- und/oder Blendrahmens im selben Augenblick an gleichen Montageort an mehreren Stellen montiert werden, kann die Montagezeit des Flügel- und/oder Blendrahmens weiter verkürzt werden.

Weitere vorteilhafte Ausführungsformen ergeben sich aus den übrigen Unteransprüchen.

Die Erfindung wird im folgenden anhand der Zeichnung näher erläutert. Dabei zeigen:
- Figur 1: eine Prinzipskizze eines ersten Ausführungsbeispiels einer Montagevorrichtung zur maschinellen Montage von Beschlagteilen an einem Flügelrahmen eines Fensters und jeweils eine Seitenansicht und eine Draufsicht auf unterschiedliche Beschlagteile;
- Figur 2: jeweils eine Draufsicht auf die Flachseite eines Eckbeschlags und eines Langteils;
- Figur 3: einen Ausschnitt aus einem Ausführungsbeispiel einer Montagestation für Beschlagteile in Draufsicht;
- Figur 4: einen Ausschnitt aus einem zweiten Ausführungsbeispiel der Montagestation in Draufsicht;
- Figur 5: jeweils eine Seitenansicht und eine Draufsicht auf mehrere Langteile unterschiedlicher Länge;
- Figuren 6 bis 8: jeweils eine Draufsicht und eine Seitenansicht verschiedener Ausführungsbeispiele eines Eckbeschlags und
- Figur 9: eine Prinzipskizze eines weiteren Ausführungsbeispiels der Montagevorrichtung.

Die im folgenden beschriebene Montagevorrichtung 1 ist allgemein zum maschinellen Montieren von Beschlagteilen an Flügel- und/oder Blendrahmen von Fenstern, Türen und dergleichen einsetzbar. Rein beispielhaft wird im folgenden beschrieben, wie Beschlagteile am Flügelrahmen eines Fensters montierbar sind.

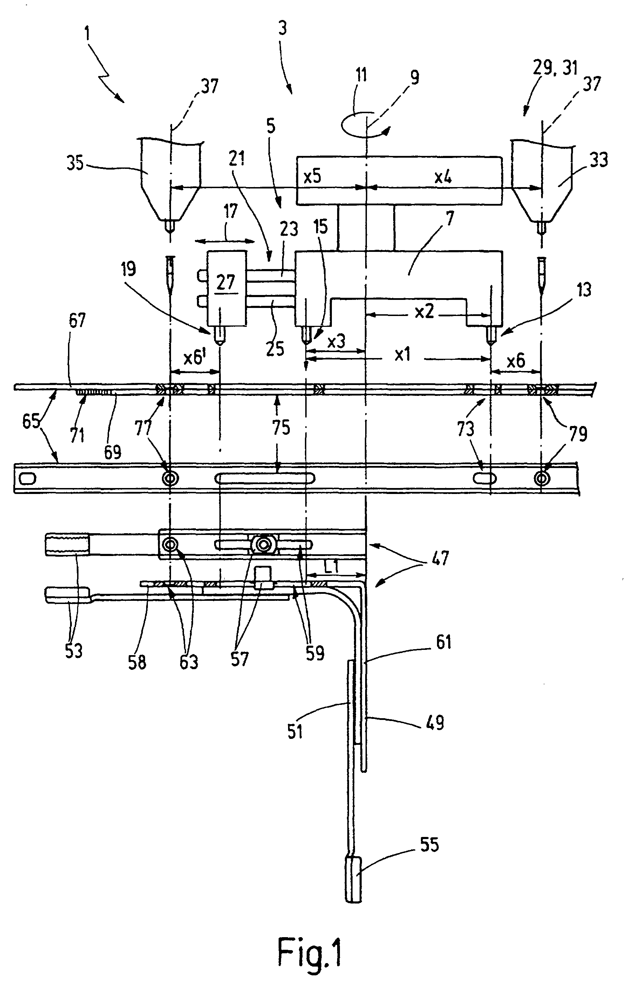

Die in Figur 1 schematisch in Seitenansicht teilweise dargestellte Montageeinrichtung 1 umfaßt eine Zuführeinrichtung 3, die zur Aufnahme von Beschlagteilen dient. Die Zuführeinrichtung 3 ist als Greifereinrichtung 5 ausgebildet und umfaßt einen Greiferkopf 7, der um eine Drehachse 9 in Richtung eines Pfeils 11 drehbar ist. An dem Greiferkopf 7 sind mehrere Greifelemente angeordnet, von denen ein erstes Greifelement 13 und ein zweites Greifelement 15 in einem fixen Abstand X1 voneinander angeordnet sind, das heißt, die Greifelemente 13, 15 sind ortsfest am Greiferkopf 7 angebracht. Das erste Greifelement 13 ist in einem Abstand X2 zur Drehachse 9 angeordnet, die sich in dem Bereich zwischen dem ersten und zweiten Greifelementen 13, 15 befindet. Das zweite Greifelement 15 ist in einem Abstand X3 von der Drehachse 9 angeordnet, der bei diesem Ausführungsbeispiel deutlich kleiner ist als der Abstand X2 des ersten Greifelements 13 zur Drehachse 9. Am Greiferkopf 7 ist ferner ein quer zur Drehachse 9 in Richtung eines Doppelpfeils 17 gegenüber den ortsfest am Greiferkopf 7 angebrachten Greifelementen 13, 15 verlagerbares drittes Greifelement 19 vorgesehen. Zur Verlagerung des dritten Greifelements 19 ist eine am Greiferkopf 7 angeordnete erste Hubeinrichtung 21 vorgesehen, die bei diesem Ausführungsbeispiel von einer pneumatischen oder hydraulischen Kolben- und Zylindereinheit gebildet ist, von der in der Darstellung gemäß Figur 1 lediglich eine Kolbenstange 23 erkennbar ist, die bei einem Hin- und Herfahren in Richtung des Doppelpfeils 17 einen das dritte Greifelement 19 aufweisenden, entlang einer Führung 25 verlagerbaren Ausleger 27 in Richtung der Greifelemente 13, 15 oder in entgegengesetzter Richtung verschiebt. Durch eine Verlagerung des dritten Greifelements 19 kann der Abstand zu den feststehenden Greifelementen 13, 15 vergrößert werden, so daß ein Beschlagteil mittels des dritten Greifelements 19 und einem der anderen Greifelemente 13, 15 klemmend gehalten werden kann.

Die Greifelemente 13, 15, 19 sind hier jeweils von einem stiftförmig ausgebildeten Greiffinger gebildet, auf dessen Funktion nachfolgend noch näher eingegangen wird.

Die Montageeinrichtung 1 umfaßt ferner eine Befestigungseinrichtung 29, die bei dem in Figur 1 dargestellten Ausführungsbeispiel von einer Schraubereinrichtung 31 gebildet ist, die einen ersten Schrauber 33 und einen zweiten Schrauber 35 umfaßt, die in einem fixen, das heißt gleichbleibenden Abstand voneinander angeordnet sind. Die Schrauber 31, 35 sind symmetrisch zur Drehachse 9 angeordnet, das heißt, der Abstand X4 zwischen dem ersten Schrauber 33 und der Drehachse 9 ist gleich groß wie der Abstand X5 zwischen dem zweiten Schrauber 35 und der Drehachse 9. Bei diesen Ausführungsbeispiel verlaufen die Drehachsen 37 der Schrauber 33, 35 parallel zur Drehachse 9.

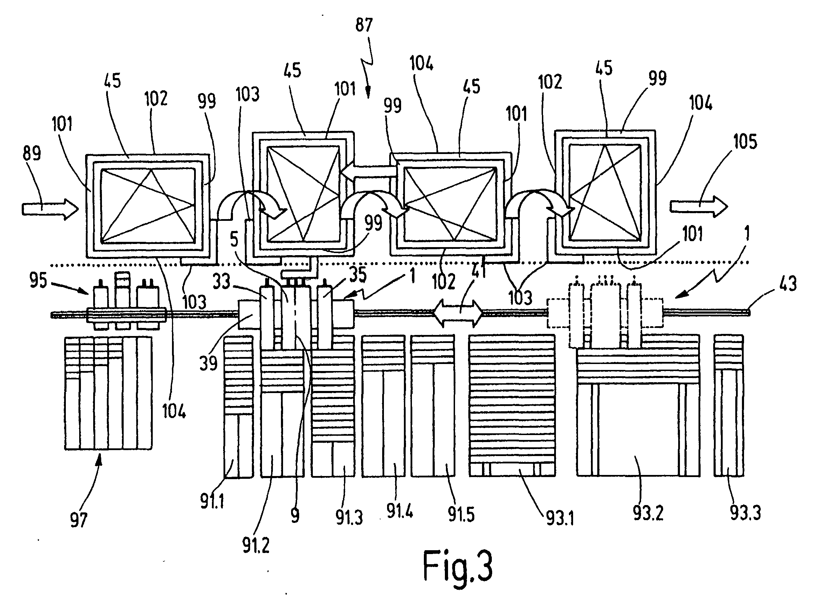

Die Greifereinrichtung 5 und die Schraubereinrichtung 31 sind an einer in Figur 3 dargestellten Transporteinrichtung 39 angeordnet, die in Richtung eines Doppelpfeils 41 auf einer Linearführung 43 entlang der Längsachse eines in Montageposition befindlichen Holmes eines Flügelrahmens 45 frei verfahrbar geführt ist. Bei einem besonders bevorzugten Ausführungsbeispiel sind die Schrauber 33, 35 fest mit der Transporteinrichtung 39 verbunden, das heißt, bei einer Drehung der Greifereinrichtung 5 um die Drehachse 9 bleiben die Schrauber 33, 35 in ihrer fixen Position und drehen sich nicht mit. Dies ist besonders vorteilhaft bei pneumatisch betriebenen Schraubern, die Druckluftanschlüsse und eine automatische Schraubenzuführung umfassen, die eine Schwenkbewegung der Schrauber stark einschränken würden.

Die Greifereinrichtung 5 und die Schraubereinrichtung 31 sind bei diesem Ausführungsbeispiel auf der Transporteinrichtung 39 gemeinsam oder unabhängig voneinander quer zur Linearführung 43 und somit zur Längsachse des jeweiligen in Montagestellung befindlichen Holms des Flügelrahmens 45, also in Richtung der Drehachse 9 frei verfahrbar ausgebildet. Aufgrund dieser Ausgestaltung der Greifereinrichtung 5 ist der Abstand X6 zwischen dem ersten Greifelement 13 und dem Schrauber 33 beziehungsweise bei einer Drehung des Greiferkopfs 7 um 180° zwischen dem ersten Greifelement 13 und dem zweiten Schrauber 35 konstant. In Figur 1 ist das dritte Greifelement 19 in einer Klemmstellung dargestellt, in der ein Beschlagteil mit Hilfe des ersten und dritten Greifelements oder zweiten und dritten Greifelements von der Greifeinrichtung 5 gehalten wird, in der der Abstand X6' zwischen dem dritten Greifelement 19 und dem zweiten Schrauber 35 beziehungsweise bei einer Drehung des Greiferkopfs 7 um die Drehachse 9 um 180° zwischen dem dritten Greifelement 19 und dem ersten Schrauber 33 gleich groß ist. Dadurch, daß der Greiferkopf 7 um die Drehachse 9 drehbar ist, während die Schrauber 33, 35 in ihrer fixen Position verbleiben, ist eine robuste und kostengünstige Auslegung der Montageeinrichtung 1 realisierbar.

Mit Hilfe der Montageeinrichtung 1 sind sowohl Eckbeschläge als auch Langteile montierbar, die im montierten Zustand in einer Umfangsnut des Flügelrahmens angeordnet und mit diesem verschraubt sind. Bei dieser Ausführungsform der Greifereinrichtung 5 ist vorgesehen, daß ein Eckbeschlag mit den in einem kurzen Abstand voneinander angeordneten zweiten und dritten Greifelementen 15, 19 und ein Langteil mit den in einem größeren Abstand voneinander angeordneten ersten und dritten Greifelementen 13, 19 aufgenommen werden soll. Hierzu müssen die Eckbeschläge und die Langteile -unabhängig von deren jeweiliger Ausgestaltung und Funktionsweise- entsprechende Greifschlitze und/oder Funktionsschlitze aufweisen, in die die Greifelemente 13, 15, 19 einfahrbar sind.

In Figur 1 ist ein erstes Ausführungsbeispiel eines Eckbeschlags 47 in Draufsicht und Seitenansicht dargestellt, das hier als Eckumlenkung ausgebildet ist, die aus einer rechtwinkligen Stulpschiene 49 und einer Schubstange 51 zusammengesetzt ist. An den Enden der Schubstange 51 sind Koppelelemente 53, 55 zum Verketten des Eckbeschlags 47 mit Langteilen vorgesehen. An der Schubstange 51 ist ferner ein Verriegelungselement 57 angeordnet, das einen in Längsrichtung eines ersten Schenkels 58 der Stulpschiene verlaufenden Funktionsschlitz 59 durchgreift. Zur Aufnahme des Eckbeschlags 47 durch die Greifereinrichtung 5 werden die zweiten und dritten Greifelemente 15, 19 in den Funktionsschlitz 59 eingefahren und durch eine Verlagerung des dritten Greifelements 19 deren Abstand zueinander vergrößert, wodurch der Eckbeschlag 47 klemmend gehalten ist. Dieser kann dann durch eine entsprechende Verlagerung am Flügelrahmen 45 montiert werden. Das erste Greifelement 13 ist bei der Aufnahme des Eckbeschlags inaktiv, das heißt, es befindet sich in einem Abstand zur Eckbeschlag, in dem es die Aufnahme des Eckbeschlags durch die zweiten und dritten Greifelemente nicht behindert.

In Figur 1 ist der Eckbeschlag 47 in seiner durch die Greifelemente 15, 19 aufgenommene Position im Teilschnitt dargestellt. Es ist ersichtlich, daß die Anordnung des Führungsschlitzes 59 gegenüber einem zweiten Schenkel 61 des Eckbeschlags 47 derart gewählt, daß der mit dem zweiten Greifelement 15 zusammenwirkende Endbereich des Funktionsschlitzes 59 in dem von den Greifelementen 15, 19 geklemmten Zustand einen Abstand L1 zur Drehachse 9 der Greifereinrichtung 5 aufweist, der gleich groß ist wie der Abstand X3 des zweiten Greifelements 15 zur Drehachse 9. Ferner ist ersichtlich, daß der zweite Schenkel 61 des Eckbeschlags 47, das heißt die Stulpschiene 49, im geklemmten Zustand des Eckbeschlags mit der Drehachse 9 des Greiferkopfs 7 fluchtet. Im ersten Schenkel 58 ist eine Durchgangsöffnung 63 für ein Befestigungselement, insbesondere Befestigungsschraube, vorgesehen, deren Abstand zum zweiten Schenkel 61 gleich groß ist wie der Abstand X5 des Schraubers 35 zur Drehachse 9. Aufgrund dieser Anordnung der Durchgangsöffnung 63 und des Funktionsschlitzes 59 kann der Eckbeschlag 47 ohne weiteres für rechte und linke Flügelrahmen verwendet werden, ohne daß hierzu die Greifereinrichtung 5 auf der Linearführung 43 (Figur 3) verfahren werden muß. Der mittels der zweiten und dritten Greifelemente 15, 19 erfaßte Eckbeschlag 47 muß hierzu lediglich um 180° um die Drehachse 9 verschwenkt werden.

Bei einem vorteilhaften Ausführungsbeispiel ist die Drehachse 9 der Nullpunkt der Montageeinrichtung 1, von dem eine Steuerungs- und/oder Regelungseinrichtung der Montageeinrichtung 1 ausgeht. Die Steuerung/Regelung ist in einfacher Weise realisierbar.

In Figur 1 ist ferner ein Ausführungsbeispiel eines durch die Greifelemente 13, 15 aufgenommenes Langteils 65 im Teilschnitt ersichtlich, das eine Stulpschiene 67 und eine Schubstange 69 mit einem eine Verzahnung aufweisenden Kupplungsabschnitt 71 umfaßt, der mit einem der eine Verzahnung aufweisenden Koppelelemente 53, 55 koppelbar ist. Das Langteil 65 umfaßt einen ersten Greifschlitz 73, in den das erste Greifelement 13 eingreift, und einen zweiten, längeren Greifschlitz 75, in den die zweiten und dritten Greifelemente 15, 19 eingreifen. Eine klemmende Fixierung des Langteils 65 erfolgt ausschließlich durch das erste Greifelement 13 und das dritte Greifelement 19, während das zweite Greifelement 15 lediglich in den zweiten Greifschlitz 75 eintaucht. Im Langteil 65 sind ferner Durchgangsöffnungen 77 und 79 für Befestigungsschrauben vorgesehen, deren Abstand voneinander gleich groß ist wie der Abstand zwischen den ersten und zweiten Schraubern 33, 35, so daß bei einer Drehung des durch die Greifereinrichtung 5 aufgenommenen Langteils 65 um 180° um die Drehachse 9 eine Verschrauben des Langteils 65 mit dem Flügelrahmen möglich ist, ohne daß die Schrauber 33, 35 hierzu entlang der Linearführung 43 (Figur 3) verlagert werden müssen.

Die in Figur 1 dargestellten Beschlagteile 47, 65 stellen jeweils eine standardisierte Ausführungsform eines Eckbeschlags- und Langteilsystem dar, das sich dadurch auszeichnet, daß alle Varianten des Eckbeschlags und die der Langteile mindestens eine Durchgangsöffnung für eine Befestigungsschraube und Greif- und/oder Funktionsschlitze, in die die Greifelemente eingreifen beziehungsweise eintauchen, aufweisen, deren Anordnung zur Drehachse 9 im durch die Greifereinrichtung 5 erfaßten Zustand beziehungsweise der Abstand voneinander so gewählt ist, daß mit Greifereinrichtung 5 alle Beschlagteile gegriffen und gegebenenfalls zur Verwendung von rechten und linken Flügelrahmen unter Beibehaltung ihres definierten Abstandes zur Drehachse 9 gedreht werden können. Mit anderen Worten, durch ein Drehung des Beschlagteils um 180° um die Drehachse 9 ist die mindestens eine in die die Greif- und/oder Funktionsschlitze aufweisende Flachseite angeordnete Durchgangsöffnung jedem der beiden im gleichen Abstand zur Drehachse 9 wie die Durchgangsöffnung angeordneten Schrauber 33, 35 zuordenbar. Das Festschrauben des Beschlagteils ist dann ohne eine Verlagerung zumindest eines der Schrauber entlang der Längsachse des Holmes des Flügelrahmens möglich.

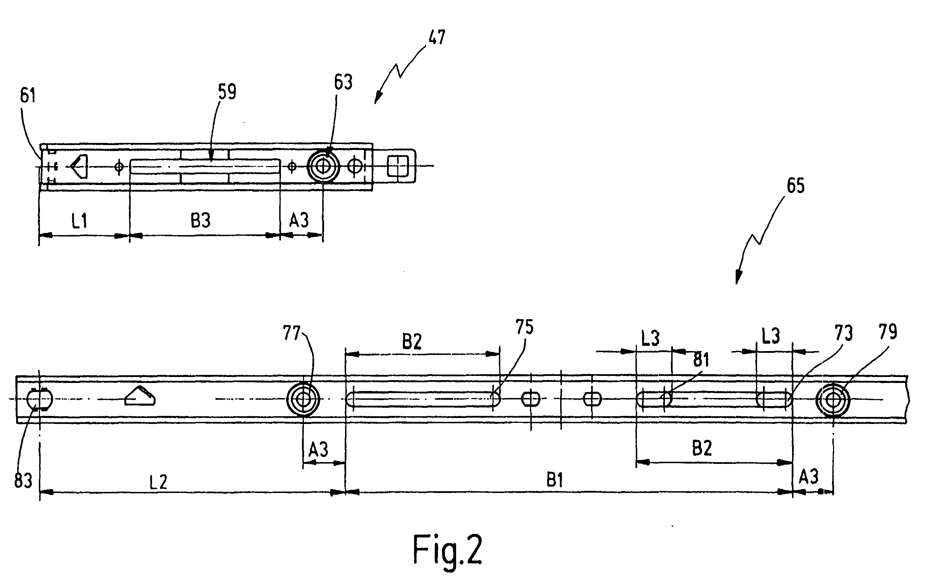

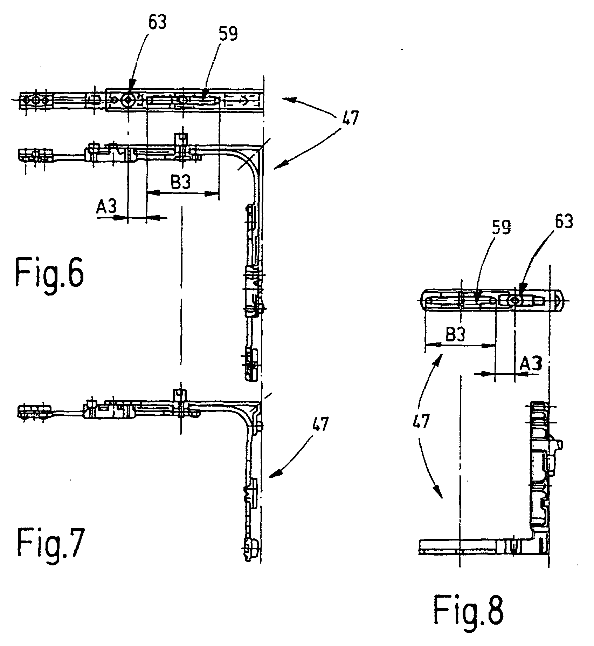

In Figur 2 ist eine Draufsicht auf ein weiteres Ausführungsbeispiel des Eckbeschlags 47 dargestellt, das einen Funktionsschlitz 59 mit der Länge B3 aufweist, dessen einem zweiten Schenkel 61 des Eckbeschlags 47 zugewandte Ende einen Abstand L1 zu dem Schenkel 61 aufweist. Des weiteren ist eine Durchgangsöffnung 63 vorgesehen, die zum Funktionsschlitz 59 einen Abstand A3 aufweist. Alle Ausführungsformen des Eckbeschlags können an ihrem in zweiten, in Figur 2 nicht erkennbaren Schenkel mindestens eine weitere Schrauben-Durchgangsöffnung 63 aufweisen. Weitere Ausführungsformen des erfindungsgemäßen Eckbeschlags 47 sind in den Figuren 6 bis 8 dargestellt, deren Durchgangsöffnung(en) 63 und Funktionsschlitz 59 gleiche Abstände zueinander und vom zweiten Schenkel 61 aufweisen, der im geklemmten Zustand des Eckbeschlags in der gleichen Ebene angeordnet ist, wie die Drehachse 9 des Greiferkopfs. Gleiche Teile beziehungsweise Abstände beziehungsweise Maße sind mit gleichen Bezugszeichen versehen, so daß insofern auf die Beschreibung zu den vorhergehenden Figuren verwiesen wird.

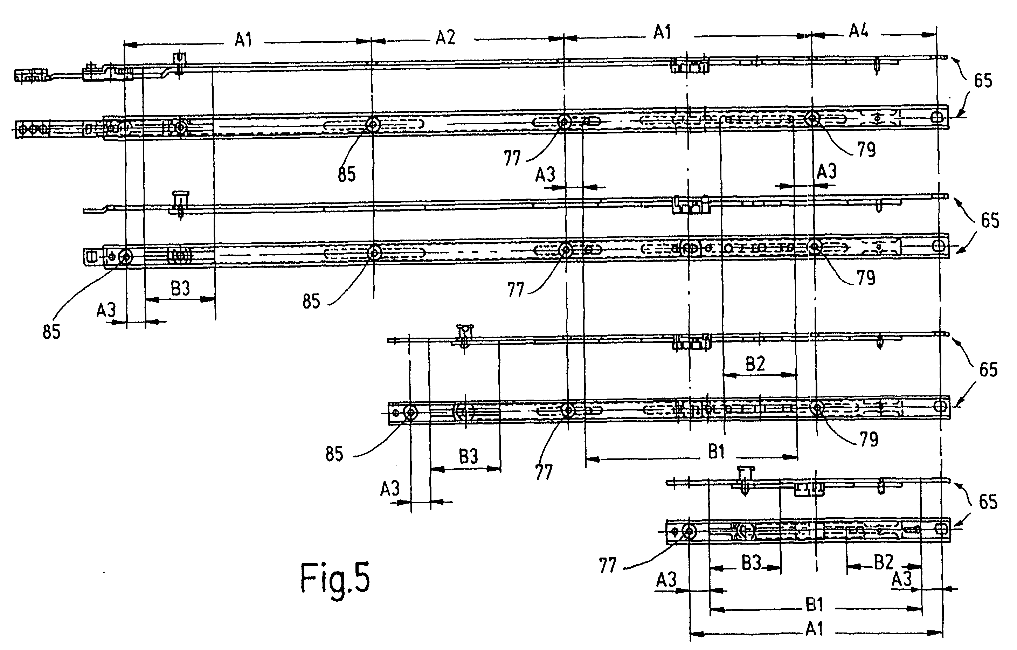

In Figur 2 ist ferner ein weiteres Ausführungsbeispiel eines Langteils 65 dargestellt, das einen ersten Greifschlitz 73 der Länge L3 für das erste Greifelement 13, einen in einem Abstand B1 vom ersten Greifschlitz 73 angeordneten zweiten Greifschlitz 75 mit der Länge B2 für das dritte Greifelement 19 aufweist. Ferner ist ein dritter Greifschlitz 81 vorgesehen, der in einem Abstand B2 vom ersten Greifschlitz 73 angeordnet ist und die Länge L3 aufweist. Überdies sind zwei Durchgangsöffnungen 77 und 79 vorgesehen, von denen die Durchgangsöffnung 77 einen Abstand A3 vom zweiten Greifschlitz 75 und die andere Durchgangsöffnung 79 einen Abstand A3 zum ersten Greifschlitz 73 aufweist. Der zweite Greifschlitz 75 weist einen Abstand L2 zu einer Bohrung 83 zur Aufnahme eines Koppelelements auf. Weitere Ausführungsformen des erfindungsgemäßen Langteils 65 mit unterschiedlichen Längen sind in Figur 5 dargestellt. Bei Langteilen 65 mit einer großen Länge sind zusätzliche Durchgangsöffnungen 85 für Befestigungsschrauben vorgesehen, in die durch eine Verlagerung der Schraubereinrichtung 31 entlang der Längsachse des Holmes mit Hilfe eines der Schrauber 33, 35 eine Schraube hindurchgeführt werden kann.

Im folgenden wird anhand von Figur 3, die eine Draufsicht auf ein erstes Ausführungsbeispiel einer Montagestation 87 zeigt, die Montage von Beschlagteilen mit Hilfe der Greifereinrichtung 5 und der Schraubereinrichtung 31 näher erläutert. Der Flügelrahmen 45 wird mit Hilfe einer nicht dargestellten Führungseinrichtung in die Montagestation 87 eingebracht (Pfeil 89), derart, daß die Längsachse seines jeweiligen, mit einem Beschlagteil zu versehenden Holmes parallel zur Linearführung 43 ausgerichtet ist. Auf der dem Flügelrahmen 45 abgewandten Seite der Linearführung 43 sind Magazine 91.1, 91.2, 91.3, 91.4 und 91.5 angeordnet, in denen sich unterschiedliche Ausführungsformen von Eckbeschlägen, zum Beispiel Eckumlenkungen, befinden. Des weiteren sind Magazine 93.1, 93.2 und 93.3 für verschiedene Ausführungsformen von Langteilen, zum Beispiel Mittelverschlüsse, angeordnet. Die Magazine befinden sich vorzugsweise unterhalb der Montageposition des Flügelrahmens. Mit Hilfe der Greifereinrichtung 5 kann den Magazinen ein gewünschtes Beschlagteil entnommen werden. Hierzu ist bei einem vorteilhaften Ausführungsbeispiel die Greifereinrichtung 5 um eine parallel zur Linearführung 43 verlaufende Achse beispielsweise um 90° nach unten verschwenkbar und gegebenenfalls mit geeigneten Mittel vertikal verlagerbar, um einem der Magazine ein darin bereitgestelltes Beschlagteil in der anhand der vorangegangenen Figuren beschriebenen Weise zu entnehmen.

In Transportrichtung (Pfeil 89) des Flügelrahmens 45 gesehen, ist der Greifereinrichtung 5 eine weitere Greifereinrichtung 95 vorgeordnet, die insbesondere zum Anbringen von einem als Eckband ausgebildeten Eckbeschlag dienen, von dem in einem Magazin 97 mehrere Ausführungsformen des Eckbandes für unterschiedliche Flügelrahmen bereitgestellt werden.

Zur Montage der in den Magazinen 91 und 93 bereitgestellten Eckumlenkungen und Mittelverschlüsse, die an einem oberen Querholm 99, einem unteren Querholm 101 und einem Längsholm 102, hier der Längsholm für die Getriebeseite des Flügelrahmens 45, angebracht werden sollen: Der Flügelrahmen in der Montagestation 87 mit Hilfe einer lediglich als Winkel 103 dargestellten Positionierungseinrichtung so gedreht, daß die Umfangsnut im oberen Querholm 99 der Zuführeinrichtung 3 und der Schraubereinrichtung 31 zugewandt ist. Die entsprechenden Beschlagteile können nun in der oben beschriebenen Weise den Magazinen entnommen und durch eine Verlagerung der Zuführeinrichtung senkrecht in Richtung des Querholms 99 in dessen Umfangsnut eingedrückt und durch die Schraubereinrichtung 31 am Querholm 99 festgeschraubt werden. Dann wird der Flügelrahmen 45 um 90° verschwenkt und hier entgegen seiner Transportrichtung um eine bestimmte Weglänge zurücktransportiert, so daß an dem Längsholm 102 in entsprechender Weise Beschlagteile anbringbar sind. Schließlich wird der Flügelrahmen 45 erneut um 90° verschwenkt, so daß an dem unteren Querholm 101 Beschlagteile montiert werden können. Mit Hilfe der Montagevorrichtung 1 werden die an dem Flügelrahmen 45 angebrachten Beschlagteile vorzugsweise miteinander verkettet. Dann wird, wie mit einem Pfeil 105 angedeutet, der Flügelrahmen 45 aus der Montagestation 87 heraustransportiert und beispielsweise einer zweiten Montagestation, in der der zweite Längsholm 104, also die Bandseite des Flügelrahmens, mit Beschlagteilen versehen wird, zugeführt. In der Montagestation 87 werden also mehrere Eckbeschläge und Langteile nacheinander in einer bestimmten Reihenfolge an dem Flügelrahmen angebracht, die eine Verkettung der Teile miteinander während ihrer Montage ermöglicht.

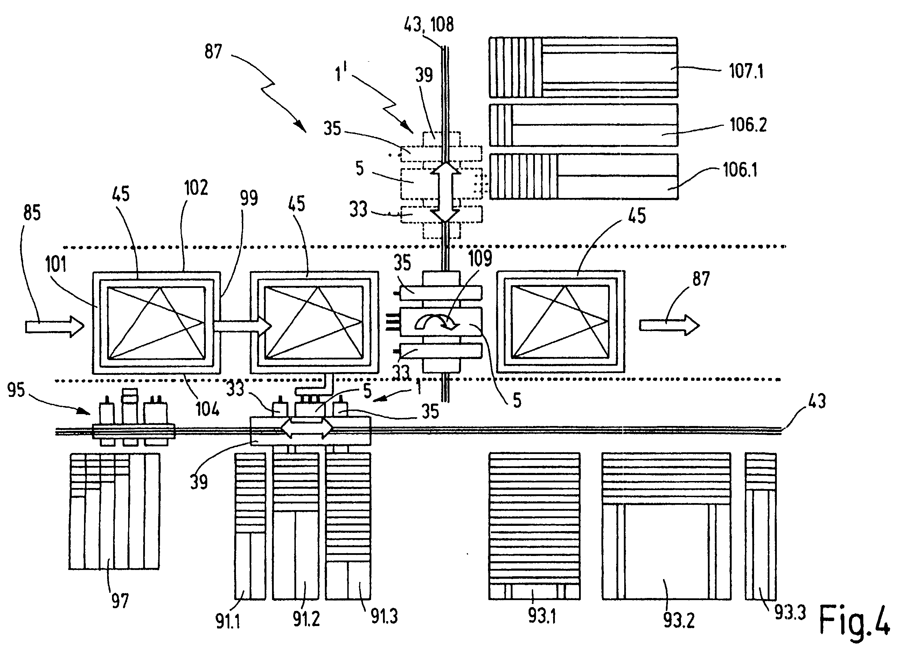

Figur 4 zeigt ein weiteres Ausführungsbeispiel der Montagestation 87. Teile, die mit denen der vorangegangenen Figuren übereinstimmen, sind mit gleichen Bezugszeichen versehen, so daß insofern auf deren Beschreibung verwiesen wird. Im folgenden soll lediglich auf die Unterschiede näher eingegangen werden. Damit der Flügelrahmen 45 in der Montagestation 87 nicht jedesmal gedreht werden muß, um an den Querholmen 99, 101 und den Längsholmen 102 und 104 Beschlagteile mit Hilfe der entlang der Linearführung 43 anbringen zu können, ist eine zweite Montagevorrichtung 1' vorgesehen, deren Aufbau und Funktion mit der Montagevorrichtung 1 übereinstimmt. Die Linearführung 43 der Montagevorrichtung 1' verläuft senkrecht zur Führungsbahn des Flügelrahmens und somit auch zur Linearführung 43 der Montagevorrichtung 1, die wiederum parallel zur Führungsbahn des Flügelrahmens angeordnet ist. Der Montagevorrichtung 1' sind Magazine 106.1 und 106.2 für Eckbeschläge und hier lediglich eine Magazin 107.1 für eine Ausführungsform des Langteils zugeordnet. Bei diesem Ausführungsbeispiel wird mit Hilfe der Montagevorrichtung 1 lediglich der Längsholm 104 (Bandseite) und mit der Montagevorrichtung 1', die in die Führungsbahn des Flügelrahmens 45 einfahrbar ist, zunächst der obere Querholm 99 mit entsprechenden Beschlagteilen versehen. Dies kann gleichzeitig erfolgen. Dann wird die Montagevorrichtung 1' aus der Führungsbahn des Flügelrahmens beispielsweise in die in Figur 4 gestrichelt dargestellte Position herausgefahren, so daß der Flügelrahmen 45 die Montagevorrichtung 1' bei einer Verlagerung in Richtung seiner Führungsbahn, bei der Darstellung gemäß Figur 4 von links nach rechts, passieren kann. Dann wird die Montagevorrichtung 1' um eine senkrecht zur Führungsbahn, also parallel zur Linearführung 43 der Montagevorrichtung 1' verlaufenden Querachse 108 um 180° verschwenkt, wie mit einem Pfeil 109 angedeutet, so daß nun auch der untere Querholm 99 mit Beschlagteilen versehen werden kann.

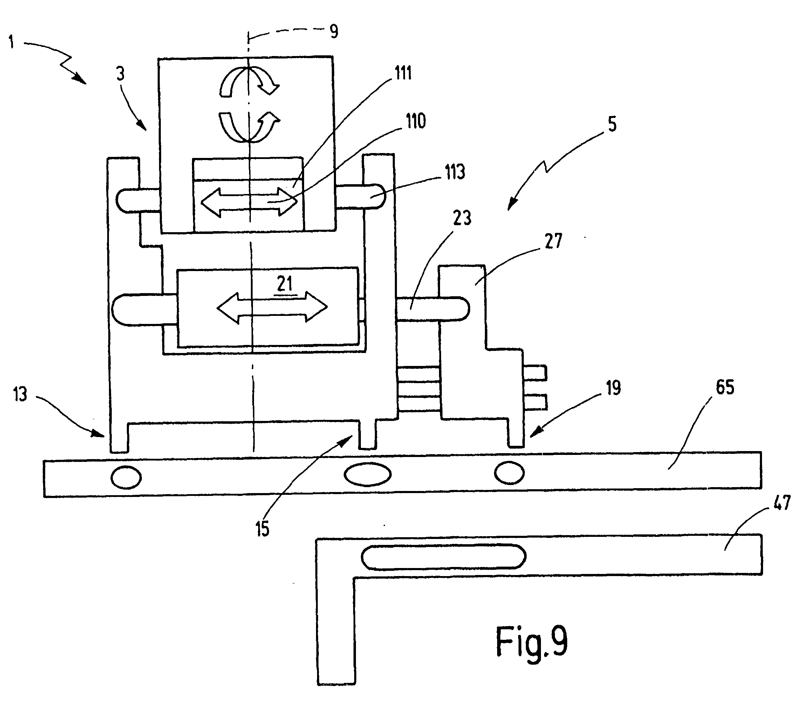

Figur 9 zeigt ein weiteres Ausführungsbeispiel der Montagevorrichtung 1, das sich von der anhand der Figuren 1, 3 und 4 beschriebenen Montagevorrichtung 1 insbesondere dadurch unterscheidet, daß die Greifereinrichtung 5 gegenüber der Transporteinrichtung 39 auf dieser verlagerbar ist (Doppelpfeil 110). Hierfür ist bei diesem Ausführungsbeispiel eine pneumatische oder hydraulische Kolben- und Zylindereinheit angedeutete zweite Hubeinrichtung 111 vorgesehen, die beispielsweise feststehend auf der Transporteinrichtung 39 angebracht ist und bei einer Ausfahr- oder Einfahrbewegung ihrer Kolbenstange 113 die Greifereinrichtung 5 verschiebt. Mittels der zweiten Hubeinrichtung 111 wird vorzugsweise ein mit einem ersten Schenkel in der Umfangsnut des Flügelrahmens angeordneter Eckbeschlag in Verschieberichtung der Transporteinrichtung 39 so verlagert, daß der andere Schenkel in den dafür vorgesehenen Umfangsnutabschnitt eingedrückt wird und verschraubt werden kann. Das Eindrücken des zweiten Schenkels wäre also auch durch eine Verlagerung der Transporteinrichtung durch eine entsprechende Wegsteuerung möglich, was allerdings sehr aufwendig ist. Der besondere Vorteil der vorzugsweise pneumatischen Kolben- und Zylindereinheit ist, daß diese kraftgesteuert werden kann, was einfacher realisierbar ist.

Aus allem wird deutlich, daß ein weiteres Ziel der Erfindung in der Bereitstellung eines für die erfindungsgemäße Montagevorrichtung geeignetes Beschlag-System anzugeben.

Im folgenden wird ein vorteilhaftes Drehkipp-Beschlag-System für ein Drehkipp-Flügelrahmen mit Drehkipplagern erläutert, bei dem am unteren Querholm mindestens zwei von Eckumlenkungen gebildete Eckbeschläge erforderlich sind, die in Magazinen an der Montagestation bereitgestellt werden können. Bei größeren Flügelrahmen sind für die Abdichtung der Bandseite sowie des unteren Querholms weitere Beschlagteile erforderlich, die von Mittelverschlüssen mit unterschiedlicher Länge in Magazinen bereitgestellt werden. Dieses System der Mittelverschlüsse besteht aus mindestens zwei Längen, wobei das längere Teil als Endteil ohne endständiges Koppelelement oder als koppelbare Ausführung ausgeführt ist. Die Mittelverschlüsse weisen an ihren Enden jeweils ein Verschlußelement auf, daß bei einer nicht koppelbaren Ausführung von einem Pilzzapfen und bei einer koppelbaren Ausführung als Exzenterzapfen ausgebildet ist. Bei Sicherheitsfenstern ist es erforderlich, die Verschlußelemente möglichst nahe der Ecklagerecke anzuordnen, da in dieser Flügelecke keine Eckumlenkung mit den an der Eckumlenkung üblicherweise befindlichen Verschlußelementen vorgesehen ist. Dazu wird ein weiterer kurzer Mittelverschluß als nicht weiter koppelbares Element mit Pilzverschlußelement zur Verfügung gestellt. Damit kann bei diesem Beschlagsystem mit mindestens vier Mittelverschlüssen jede Fensterund Fenstertürgröße im Standard- und Sicherheitsbereich maschinell bestückt werden. Vorteilhaft ist dabei, daß die Langteile relativ kurz sind und nur vier Magazinplätze belegen, was die Montagegeschwindigkeit erhöht und die Maschinenkosten reduziert.

Die Mittelverschlüsse für die Bandseite und für den unteren Querholm des Flügelrahmens werden in solchen Längen bereitgestellt, daß alle gängigen Flügelrahmengrößen bei vorzugsweise gleichzeitiger Kopplung der Teile miteinander bestückt werden können und gleichzeitig bei den am häufigsten produzierten Flügelrahmengrößen nur jeweils ein Teil erforderlich ist, so daß die Montagegeschwindigkeit erheblich gesteigert werden kann, da keine weiteren Koppelelemente benötigt werden. Eine bevorzugte Längenabstufung der Mittelverschlüsse ist 200 mm, 400 mm und 600 mm.

Zur Montage der Baugruppen werden Eckumlenkungen, fixe Eckbauteile wie Falzaxerstulp oder Eckbandsicherungen sowie Langteile, wie zum Beispiel Mittelverschlüsse, jeweils in der gleichen Weise an einer Formausprägung, das heißt Greif- oder Funktionsschlitz, an der Stulpschiene von der Greifereinrichtung aufgenommen und in die Umfangsnut des Flügelrahmens eingesetzt und mit mindestens einer Schraubverbindung fixiert. Dabei werden Eckbaugruppen bevorzugt an dem Schenkel senkrecht zur Stulpschiene gegriffen, an dem sich das Verschlußelement befindet. Dabei ist ein Schenkel der Eckbaugruppe frei und zeigt in Montagerichtung zum Flügelrahmen hin. Die Greiferaufnahme an den Langteilen erfolgt ebenfalls senkrecht zur Stulpschiene des Langteils.

Die Mindestkonfiguration der Formausprägung an den Beschlagteilen ist der Funktionsschlitz für das Verschlußelement. Bei Langteilen befindet sich ebenfalls mindestens der Funktionsschlitz für den Hub des Verschlußelements am Bauteil. Da die Langteile eine größere Stulpschienenlänge aufweisen als die Eckbeschläge, befinden sich noch weitere Greiferschlitze in der Stulpschiene.

Eckumlenkungen und Eckbaugruppen werden bevorzugt von dem durch die zweiten und dritten Greifelemente 15, 19 gebildete Greifelementenpaar aufgenommen, während das erste Greifelement 13 außerhalb beziehungsweise neben der Eckbaugruppe angeordnet ist. Bei Langteilen wirken lediglich die beiden äußeren Greifelemente 13, 19, während das zweite Greifelement 15 in eine entsprechend positionierte Freimachung in der Stulpschiene eingreift.

Wie aus Figur 5 ersichtlich, befindet sich bei kurzen Langteilen die Greiferposition mittig auf der Stulpschiene. Dabei kann für ein Greifelement der Funktionsschlitz des Verschlusses genutzt werden, so daß nur zwei weitere Greifschlitze in die Schiene eingebracht werden müssen. Bei Langteilen mit größerer Länge wird die Greifposition bevorzugt außermittig in der Nähe der Koppelstelle angeordnet, damit die Fügekräfte für den Kopplungsvorgang von der Greifereinrichtung aufgenommen werden kann. Da der Funktionsschlitz des Verschlußelements sich an der Koppelstelle des gegenüberliegenden Langteilendes befindet, ist es erforderlich, insgesamt drei Greifschlitze in das Langteil einzubringen, wobei zwei äußere Schlitze zur Aufnahme der aktiven Greifelemente und der innere Schlitz als Freimachung für das zweite Greifelement benötigt werden. Nach dem Einlegen der Teile in die Umfangsnut des Flügelrahmens wird das Beschlagteil mit Hilfe der Schrauber 33, 35 mit wenigstens einer Schraube am Flügelrahmen fixiert. Die Anordnung der Durchgangsöffnungen zur gedachten Mittellinie der Greifposition ist symmetrisch, das heißt, diese besitzen gleichen Abstand zum jeweils äußeren Greifelement. Bei Langteilen besteht die Symmetrie der Schraubposition sowohl zum Greifermittelpunkt als auch zur Drehachse des Greiferkopfs. Die symmetrische Positionierung der Durchgangsöffnungen für Schrauben zur Drehachse des Greiferkopfs 7 ist bei Funktionsschlitzen, Eckumlenkungen und Greifschlitzen der Langteile einheitlich gegeben.

Die Drehachse der Greifereinrichtung 5 liegt -vorzugsweise bei allen Ausführungsvarianten- bei aufgenommenen Eckumlenkungen exakt an der Oberkante des freistehenden Schenkels der Eckumlenkung, so daß bei einem Drehen der Eckbaugruppe jeweils der zur Dreh- und Symmetrieachse rechte oder linke Schrauber zum Fixieren der Baugruppe im Flügelrahmen genutzt werden kann. Die Drehachse der Greifereinrichtung 5 liegt bei -vorzugsweise bei allen Ausführungsvarianten- Langteilen exakt in der Mitte zwischen den zwei äußeren Greifelementen 13 und 19, so daß auch hier bei dem Bestücken von rechten und linken Flügelrahmen jeweils das gleiche Beschlagteil aus dem Magazin gegriffen werden kann und durch Verdrehen um 180° um die Drehachse 9 des Greiferkopfs 7 das Koppelelement beziehungsweise der Koppelabschnitt des Beschlagteils in die richtige Position gebracht werden kann.

Zusammenfassend bleibt festzuhalten, daß durch die Montageeinrichtung 1 beziehungsweise 1' eine maschinelle Montage der Beschlagteile in sehr kurzer Zeit möglich ist, wodurch die Herstellungskosten verringert werden können.

## Patentansprüche

1. Vorrichtung zur maschinellen Montage von Beschlagteilen an Flügelund/oder Blendrahmen von Fenstern, Türen oder dergleichen, mit einer mehrere Greifelemente aufweisenden Greifereinrichtung (5) zum Zuführen der zu montierenden Beschlagteile zum Flügel- und/oder Blendrahmen, und mit einer Befestigungseinrichtung (29), **dadurch gekennzeichnet, daß** ein erstes Greifelement (13) und ein zweites Greifelement (15) in einem fixen Abstand (X1) voneinander angeordnet sind und daß ein drittes Greifelement (19) gegenüber den ersten und zweiten Greifelementen (13;15) der art verlagerbar ausgebildet ist, daß mittels der zweiten und dritten Greif elementen (15;19) ein Eckbeschlag und :mittels der ersten und dritten Greifelemente (13,19) ein Langteil klemmend haltbar ist.

2. Montagevorrichtung nach Anspruch 1, **dadurch gekennzeichnet, daß** das zweite Greifelement (15) zwischen den ersten und dritten Greifelementen (13;19) angeordnet ist.

3. Montagevorrichtung nach einem der vorhergehenden Ansprüche, **dadurch gekennzeichnet, daß** mittels der ersten und dritten Greifelemente (13;19) ein Eckbeschlag und mit Hilfe der zweiten und dritten Greifelemente (15;19) ein Langteil klemmend haltbar ist.

4. Montagevorrichtung nach einem der vorhergehenden Ansprüche, **dadurch gekennzeichnet, daß** mindestens ein Greifelement (13,15,19) als Greiffinger ausgebildet ist, der in einen Greifschlitz oder einen Funktionsschlitz im Beschlagteil eingreifbar ausgebildet ist.

5. Montagevorrichtung nach einem der vorhergehenden Ansprüche, **dadurch gekennzeichnet, daß** die Greifereinrichtung (5) und die Befestigungseinrichtung (29) an einer entlang der Längsachse mindestens eines Holmes (99,101,102,104) des Flügel- und/oder Blendrahmens (45) frei verfahrbar geführten Transporteinrichtung (39) angeordnet sind.

6. Montagevorrichtung nach einem der vorhergehenden Ansprüche, **dadurch gekennzeichnet, daß** die Greifereinrichtung (5) und die Befestigungseinrichtung (29) quer oder im wesentlichen quer zur Längsachse des Holmes (99,101,102,104) frei verfahrbar sind.

7. Montagevorrichtung nach einem der vorhergehenden Ansprüche, **dadurch gekennzeichnet, daß** der Greiferkopf (7) um eine in dem Bereich zwischen den ersten und zweiten Greifelementen (13,15) angeordnete Drehachse (9) schwenkbar und/oder rotierbar ausgebildet ist.

8. Montagevorrichtung nach einem der vorhergehenden Ansprüche, **dadurch gekennzeichnet, daß** die ersten und zweiten Greifelemente (13,15) einen unterschiedlichen Abstand zur Drehachse (9) des Greiferkopfs (7) aufweisen.

9. Montagevorrichtung nach einem der vorhergehenden Ansprüche, **dadurch gekennzeichnet, daß** die Befestigungseinrichtung (29) von einer mindestens einen Schrauber (33;35) umfassende Schraubereinrichtung (31) gebildet ist, wobei der Schrauber (33;35) derart angeordnet ist, daß auch bei einer Verlagerung der Greifereinrichtung (5) der Abstand (X5;X4) zwischen dem Schrauber (35;33) und der Drehachse (9) des Greiferkopfs (7) konstant ist.

10. Montagevorrichtung nach Anspruch 9, **dadurch gekennzeichnet, daß** die Schraubereinrichtung (31) zwei in einem fixen Abstand voneinander angeordnete Schrauber (33,35) umfaßt, deren jeweiliger Abstand (X4;X5) zu der zwischen den ersten und zweiten Schraubern (33,35) angeordneten Drehachse (9) des Greiferkopfs (7) gleich ist.

11. Montagevorrichtung nach einem der vorhergehenden Ansprüche 9 und 10, **dadurch gekennzeichnet, daß** der Abstand (X6') zwischen dem zweiten Schrauber (35;33) und dem in einer Klemmstellung angeordneten dritten Greifelement (19) gleich groß ist, wie der Abstand (X6) zwischen dem ersten Schrauber (33;35) und dem ersten Greifelement (13).

12. Montagevorrichtung nach einem der vorhergehenden Ansprüche, **dadurch gekennzeichnet, daß** das dritte Greifelement (19) mit Hilfe einer -vorzugsweise pneumatischen oder hydraulischen- ersten Hubeinrichtung (21) gegenüber den ersten und zweiten Greifelementen (13,15) verlagerbar, vorzugsweise verschiebbar, ist.

13. Montagevorrichtung nach einem der vorhergehenden Ansprüche, **dadurch gekennzeichnet, daß** die Greifereinrichtung (5) mit Hilfe einer -vorzugsweise pneumatischen oder hydraulischen- zweiten Hubeinrichtung (111) relativ gegenüber der Transporteinrichtung (39) in Richtung der Längsachse des Holmes (99,101,102,104) verlagerbar, vorzugsweise verschiebbar, ist.

14. Montagevorrichtung nach einem der vorhergehenden Ansprüche, **dadurch gekennzeichnet, daß** die Greifereinrichtung (5) und gegebenenfalls die Befestigungseinrichtung (29) um eine parallel zur Längsachse des Holmes (99,101) verlaufende Querachse (108) schwenkbar und/oder rotierbar ausgebildet ist.

15. Montagevorrichtung nach einem der vorhergehenden Ansprüche, **dadurch gekennzeichnet, daß** der freie Schenkel (61) eines durch die Zuführeinrichtung (3) aufgenommenen Eckbeschlags (47) mit der Drehachse (9) des Greiferkopfs (7) zumindest im wesentlichen fluchtet.

16. Verfahren zur maschinellen Montage von Beschlagteilen an Flügel- und/oder Blendrahmen von Fenstern, Türen oder dergleichen, mit Hilfe einer Vorrichtung nach einem der vorhergehenden Ansprüche 1 bis 14, bei dem in einem ersten Bearbeitungsschritt mindestens einem Holm des sich an einem Montageort befindlichen Flügel- und/oder Blendrahmens mindestens ein maschinell gegriffenes Beschlagteil zugeführt wird, das in einem zweiten Bearbeitungsschritt maschinell an dem Holm festgeschraubt wird, **dadurch gekennzeichnet, daß** an dem Montageort mindestens ein Eckbeschlag und mindestens ein Langteil an dem Holm montiert wird.

17. Verfahren nach Anspruch 16, **dadurch gekennzeichnet, daß** mehrere gleiche oder unterschiedliche Beschlagteile gleichzeitig an dem Holm montiert werden.

18. Verfahren nach einem der vorhergehenden Ansprüche 16 und 17, **dadurch gekennzeichnet, daß** das Beschlagteil nach der Zuführung an den Holm durch Einklipsen oder Einpressen in eine Flügel-/Blendrahmenfalz-Umfangsnut vorfixiert wird.

19. Verfahren nach einem der vorhergehenden Ansprüche 16 bis 18, **dadurch gekennzeichnet, daß** die Montagerichtung der Beschlagteile senkrecht zur Flügel-/Blendrahmenfalz-Umfangsnut verläuft.

## Claims

1. Apparatus for the mechanical assembly of fittings on sash and/or blind frames of windows, doors or the like, said apparatus having a gripping means (5), provided with a plurality of gripping members, for supplying the fittings to be assembled to the sash and/or blind frame, and a securing means (29), **characterised in that** a first gripping member (13) and a second gripping member (15) are disposed at a fixed spacing (X1) from each other, and **in that** a third gripping member (19) is displaceable relative to the first and second gripping members (13, 15) in such a manner that a comer fitting is retainable in a clamping manner by means of the second and third gripping members (15, 19), and a long part is retainable in a clamping manner by means of the first and third gripping members (13, 19).

2. Assembly apparatus according to claim 1, **characterised in that** the second gripping member (15) is disposed between the first and third gripping members (13, 19).

3. Assembly apparatus according to one of the preceding claims, **characterised in that** a corner fitting is retainable in a clamping manner by means of the first and third gripping members (13, 19), and a long part is retainable in a clamping manner with the aid of the second and third gripping members (15, 19).

4. Assembly apparatus according to one of the preceding claims, **characterised in that** at least one gripping member (13, 15, 19) is in the form of a gripping finger, which is configured so as to be engageable in a gripping slot or an operational slot in the fitting.

5. Assembly apparatus according to one of the preceding claims, **characterised in that** the gripping means (5) and the securing means (29) are disposed on a conveying means (39), which is guided in a freely displaceable manner along the longitudinal axis of at least one strut (99, 101, 102, 104) of the sash and/or blind frame (45).

6. Assembly apparatus according to one of the preceding claims, **characterised in that** the gripping means (5) and the securing means (29) are freely displaceable transversely or substantially transversely relative to the longitudinal axis of the strut (99, 101, 102, 104).

7. Assembly apparatus according to one of the preceding claims, **characterised in that** the gripping head (7) is configured so as to be pivotable and/or rotatable about an axis of rotation (9) disposed in the region between the first and second gripping members (13, 15).

8. Assembly apparatus according to one of the preceding claims, **characterised in that** the first and second gripping members (13, 15) are disposed at different spacings from the axis of rotation (9) of the gripping head (7).

9. Assembly apparatus according to one of the preceding claims, **characterised in that** the securing means (29) is formed by a screw-securing means (31), which includes at least one screw-securing member (33, 35), the screw-securing member (33, 35) being disposed in such a manner that the spacing (X5, X4) between the screw-securing member (35, 33) and the axis of rotation (9) of the gripping head (7) is constant, even during the displacement of the gripping means (5).

10. Assembly apparatus according to claim 9, **characterised in that** the screwing means (31) includes two screw-securing members (33, 35) disposed at a fixed spacing from each other, the respective spacing (X4, X5) between said screw-securing members and the axis of rotation (9) of the gripping head (7), which axis is disposed between the first and second screw-securing members (33, 35), being identical.

11. Assembly apparatus according to one of the preceding claims 9 and 10, **characterised in that** the spacing (X6') between the second screw-securing member (35, 33) and the third gripping member (19), which is disposed in a clamping position, is the same as the spacing (X6) between the first screw-securing member (33, 35) and the first gripping member (13).

12. Assembly apparatus according to one of the preceding claims, **characterised in that** the third gripping member (19) is displaceable, preferably slidable, relative to the first and second gripping members (13, 15) with the aid of a - preferably pneumatic or hydraulic - first lifting means (21)

13. Assembly apparatus according to one of the preceding claims, **characterised in that** the gripping means (5) is displaceable, preferably slidable, relative to the conveying means (39) in the direction of the longitudinal axis of the strut (99, 101, 102, 104) with the aid of a - preferably pneumatic or hydraulic - second lifting means (111).

14. Assembly apparatus according to one of the preceding claims, **characterised in that** the gripping means (5), and possibly the securing means (29) is/are pivotable and/or rotatable about a transverse spindle (108), which extends parallel to the longitudinal axis of the strut (99, 101).

15. Assembly apparatus according to one of the preceding claims, **characterised in that** the free portion (61) of a comer fitting (47), received by supply means (3), is at least substantially in alignment with the axis of rotation (9) of the gripping head (7).

16. Method for the mechanical assembly of fittings on sash and/or blind frames of windows, doors or the like with the aid of an apparatus according to one of the preceding claims 1 to 14, wherein, in a first processing step, at least one mechanically gripped fitting is supplied to at least one strut of the sash and/or blind frame situated at an assembly location, which fitting is securedly screw-connected mechanically to the strut in a second processing step, **characterised in that** at least one comer fitting and at least one long part are assembled on the strut at the assembly location.

17. Method according to claim 16, **characterised in that** a plurality of identical or different fittings are assembled simultaneously on the strut.

18. Method according to one of the preceding claims 16 and 17, **characterised in that**, after the supplying operation, the fitting is pre-secured on the strut by being clipped or pressed into a notched circumferential groove of the sash/blind frame.

19. Method according to one of the preceding claims 16 to 18, **characterised in that** the assembly direction of the fittings extends perpendicularly relative to the notched circumferential groove of the sash/blind frame.

## Revendications

1. Dispositif de montage automatique de ferrures sur des ouvrants et/ou des dormants de fenêtres, de portes ou similaires, comprenant un dispositif de prise (5) présentant plusieurs éléments de prise pour amener à l'ouvrant et/ou au dormant les ferrures à monter, ainsi qu'un dispositif de fixation (29),
**caractérisé en ce que**
un premier élément de prise (13) et un deuxième élément de prise (15) présentent entre eux un espacement fixe (X1), tandis qu'un troisième élément de prise (19) peut se déplacer par rapport au premier et au deuxième élément de prise (13 ; 15) de manière que le deuxième et le troisième éléments de prise (15 ; 19) peuvent maintenir par pincement une ferrure d'angle et que le premier et le troisième éléments de prise (13 ; 19) peuvent maintenir par pincement une partie longitudinale.

2. Dispositif de montage selon la revendication 1,
**caractérisé en ce que**
le deuxième élément de prise (15) peut être monté entre le premier et le troisième éléments de prise (13 ; 19).

3. Dispositif de montage selon la revendication 1 ou 2,
**caractérisé en ce que**
peuvent être maintenues par pincement une ferrure d'angle par le premier et le troisième éléments de prise (13 ; 19) et une partie longitudinale à l'aide du second et du troisième éléments de prise (15 ; 19).

4. Dispositif de montage selon une des revendications précédentes,
**caractérisé en ce qu'**
au moins un élément de prise (13, 15, 19) est constitué par un doigt de prise qui est constitué de manière à pouvoir s'engager dans une fente de prise ou dans une fente fonctionnelle prévue dans la ferrure.

5. Dispositif de montage selon une des revendications précédentes,
**caractérisé en ce que**
le dispositif de prise (5) et le dispositif de fixation (29) sont montés sur un dispositif de transport (39) qui peut se déplacer librement en étant guidé le long de l'axe longitudinal d'au moins un montant (99, 101, 102, 104) de l'ouvrant et/ou du dormant (45).

6. Dispositif de montage selon une des revendications précédentes,
**caractérisé en ce que**
le dispositif de prise (5) et le dispositif de fixation (29) peuvent se déplacer librement perpendiculairement, ou à peu près perpendiculairement, à l'axe longitudinal du montant (99, 101, 102, 104).

7. Dispositif de montage selon une des revendications précédentes,
**caractérisé en ce que**
la tête de prise (7) est constituée de manière à pouvoir basculer et/ou tourner autour d'un axe de rotation (9) disposé dans la zone située entre le premier et le second élément de prise (13 ; 15).

8. Dispositif de montage selon une des revendications précédentes,
**caractérisé en ce que**
le premier et le deuxième éléments de prise (13, 15) sont à des distances différentes de l'axe de rotation (9) de la tête de prise (7).

9. Dispositif de montage selon une des revendications précédentes,
**caractérisé en ce que**
le dispositif de fixation (29) est constitué par un dispositif de vissage (31) comportant au moins un tournevis (33 ; 35) disposé de manière que, quand le dispositif de prise (5) se déplace, la distance (X5 ; X4) entre le tournevis (35 ; 33) et l'axe de rotation (9) de la tête de prise (7) reste constante.

10. Dispositif de montage selon la revendication 9,
**caractérisé en ce que**
le dispositif de vissage (31) comprend deux tournevis (33, 35) espacés fixement l'un de l'autre et dont les distances respectives (X4 ; X5) à l'axe de rotation (9) de la tête de prise (7) située entre le premier et le second tournevis (33 ; 35) sont égales.

11. Dispositif de montage selon la revendication 9 ou 10,
**caractérisé en ce que**
la distance (X6') entre le second tournevis (35 ; 33) et le troisième élément de prise (19) en position de pincement est égale à la distance (X6) entre le premier tournevis (33 ; 35) et le premier élément de prise (13).

12. Dispositif de montage selon une des revendications précédentes,
**caractérisé en ce que**
le troisième élément de prise (19) peut se déplacer, et de préférence coulisser, par rapport au premier et au deuxième éléments de prise (13, 15) à l'aide d'un premier dispositif de déplacement (21), de préférence pneumatique ou hydraulique.

13. Dispositif de montage selon une des revendications précédentes,
**caractérisé en ce que**
le dispositif de prise (5) peut se déplacer, et de préférence coulisser, par rapport au dispositif de transport (39) selon la direction de l'axe longitudinal du montant (99, 101, 102, 104) à l'aide d'un deuxième dispositif de déplacement (111), de préférence pneumatique ou hydraulique.

14. Dispositif de montage selon une des revendications précédentes,
**caractérisé en ce que**
le dispositif de prise (5) et éventuellement le dispositif de fixation (29) sont constitués de manière à pouvoir basculer et/ou tourner autour d'un axe transversal (108) parallèle à l'axe longitudinal du montant (99, 101).

15. Dispositif de montage selon une des revendications précédentes,
**caractérisé en ce que**
la branche libre (61) d'une ferrure d'angle (47) prise en charge par le dispositif d'amenée (3) est alignée au moins essentiellement avec l'axe de rotation (9) de la tête de prise (7).

16. Procédé pour réaliser le montage automatique de ferrures sur des ouvrants et/ou des dormants de fenêtres, de portes ou similaires, à l'aide d'un dispositif selon une des revendications précédentes 1 à 14, dans lequel, au cours d'une première étape de façonnage, au moins une ferrure saisie automatiquement est amenée à un montant de l'ouvrant et/ou du dormant qui se trouve au point de montage, puis est fixée automatiquement sur ce montant dans une seconde étape de façonnage,
**caractérisé en ce que**
sur le lieu du montage on installe sur le montant au moins une ferrure d'angle et au moins une partie allongée.

17. Procédé selon la revendication 16,
**caractérisé en ce que**
plusieurs ferrures identiques ou différentes sont installées en même temps sur le montant.

18. Procédé selon la revendication 16 ou 17,
**caractérisé en ce que**
la ferrure, après qu'elle ait été amenée sur le montant, est préfixée par clipsage ou emmanchement à force dans une rainure périphérique de la feuillure de l'ouvrant ou du dormant.

19. Procédé selon une des revendications 16 à 18,
**caractérisé en ce que**
la direction de montage des ferrures est perpendiculaire à la rainure périphérique de la feuillure d'ouvrant ou de dormant.
